(19) Europäisches Patentamt
European Patent Office
Office européen des brevets

(11) **EP 2 487 807 B1**

(12) **EUROPEAN PATENT SPECIFICATION**

(45) Date of publication and mention
of the grant of the patent:
**11.05.2016 Bulletin 2016/19**

(51) Int Cl.:
***H04B 7/02*** (2006.01)    ***H04B 7/04*** (2006.01)
***H04B 7/14*** (2006.01)

(21) Application number: **11154042.3**

(22) Date of filing: **10.02.2011**

(54) **Method for increasing quality of signals received by a destination device**

Verfahren zur Steigerung der Qualität von Signalen, die von einer Zielvorrichtung empfangen werden

Procédé pour augmenter la qualité de signaux reçus par un dispositif de destination

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**15.08.2012 Bulletin 2012/33**

(73) Proprietors:
• **Mitsubishi Electric R&D Centre Europe B.V.**
**1119 NS Schiphol Rijk (NL)**
Designated Contracting States:
**FR**
• **Mitsubishi Electric Corporation**
**Chiyoda-ku**
**Tokyo 100-8310 (JP)**
Designated Contracting States:
**AL AT BE BG CH CY CZ DE DK EE ES FI GB GR HR HU IE IS IT LI LT LU LV MC MK MT NL NO PL PT RO RS SE SI SK SM TR**

(72) Inventors:
• **Gresset, Nicolas**
**35708, RENNES Cedex 7 (FR)**
• **Plainchault, Mélanie**
**35708, RENNES Cedex 7 (FR)**

(74) Representative: **Le Guen-Maillet**
**5, place de Newquay**
**BP 70250**
**35802 Dinard Cedex (FR)**

(56) References cited:
**US-A1- 2008 045 212**

• **RAPHAEL ROLNY ET AL: "Distributed gain matrix optimization in non-regenerative MIMO relay networks", SIGNALS, SYSTEMS AND COMPUTERS, 2009 CONFERENCE RECORD OF THE FORTY-THIRD ASILOMAR CONFERENCE ON, IEEE, PISCATAWAY, NJ, USA, 1 November 2009 (2009-11-01), pages 1503-1507, XP031679626, ISBN: 978-1-4244-5825-7**
• **MOCO A ET AL: "Performance Evaluation of Virtual MIMO Schemes for the UL OFDMA Based Systems", WIRELESS AND MOBILE COMMUNICATIONS, 2008. ICWMC '08. THE FOURTH INTERNATIONAL CONFERENCE ON, IEEE, PISCATAWAY, NJ, USA, 27 July 2008 (2008-07-27), pages 71-76, XP031299555, ISBN: 978-0-7695-3274-5**
• **HUAWEI: "Spatial Multiplexing of Type-2 L1 and L2 Relays", 3GPP DRAFT; R1-091802 SPATIAL MULTIPLEXING OF TYPE-2 L1 AND L2 RELAYS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. San Francisco, USA; 20090428, 28 April 2009 (2009-04-28), XP050339319, [retrieved on 2009-04-28]**
• **JINGON JOUNG ET AL: "Design of half and full-duplex relay systems based on the MMSE formulation", STATISTICAL SIGNAL PROCESSING, 2009. SSP '09. IEEE/SP 15TH WORKSHOP ON, IEEE, PISCATAWAY, NJ, USA, 31 August 2009 (2009-08-31), pages 281-284, XP031541092, ISBN: 978-1-4244-2709-3**

**Description**

The present invention generally relates to a method and a device for increasing the quality of signals received by a destination device of a wireless telecommunications network, the signals being subject to interference being generated by a plurality of flows of complex modulation symbols transmitted on the same resource,

When several source devices transmit signals to a destination device using the same resource, in the framework of a wireless telecommunications network, interference occurs. Interference degrades the quality of signals received by the destination device and therefore may decrease the overall performance of the wireless telecommunications network.

The document "Distributed Gain Matrix Optimization in Non-Regenerative MIMO Relay Networks", Rolny et al, Conference record of the forty-third Asilomar Conference on Signals, Systems and Computers, IEEE, 2009, considers a half-duplex multiple-input multiple output relay network with multiple source and relay nodes and a set of collocated destination antennas.

The document "Performance Evaluation of Virtual MIMO Schemes for the UL OFDMA Based Systems", Moco et al, Conference record of the fourth international conference on wireless and mobile communications, IEEE. 2008, proposes emulating a multiple-input multiple-output channel, considering two types of relays: amplify-and-forward and selective decode-and-forward.

The document "Spatial Multiplexing of Type-2 L1 and L2 Relays", Huawei, 3rd Generation Partnership Project, 3GPP Draft R1-091802, 2009, considers a communications system, comprising a relay node (RN) applying an adaptive amplify-and-forward operation.

The document "Design of half and full-duplex relay systems, based on the MMSE formulation", Joung et al, fifteenth workshop on statistical signal processing, IEEE, 2009, considers half- and full-duplex relay processing matrices and source destination beamforming vectors jointly optimized based on a minimum mean-square-error formulation under inequality constraints on the transmit power of source and relays.

It is desirable to overcome the aforementioned problems which occur in typical wireless telecommunications networks.

In particular, it is desirable to provide a solution that allows the increasing of the quality of signals received by a destination device of a wireless telecommunications system, when a plurality of flows of complex modulation symbols is transmitted to the destination device using the same resource.

It is furthermore desirable to provide a solution that allows the increasing of the SINR *(Signal-to-Interference-plus-Noise Ratio)* of at least one signal among signals received by a destination device of a wireless telecommunications system, when a plurality of flows of complex modulation symbols is transmitted to the destination device using the same resource.

It is furthermore desirable to provide, when a plurality of flows of complex modulation symbols is transmitted to the destination device using the same resource, a solution that allows reducing the interference generated by one flow with any other flow of the plurality.

To that end, the present invention concerns a method for determining a configuration of a wireless telecommunications network, as defined by claim 1.

Thus, when configuring the wireless telecommunications network with the determined configuration, the quality of signals received by the destination device is increased. In addition, the configuration takes practically into account hardware power transmission constraints of the relay device that is introduced in the wireless telecommunications network in order to increase the quality of signals received by the destination device.

According to a particular feature, the first and second obtaining steps and the determining step are repeated when a change of the information identifying source devices occurs.

Thus, the quality of signals received by the destination device is further improved when there is a change in the number of source devices for which the relay device has to apply the pre-coding to the complex modulation symbols, or estimates thereof. When the transmission power constraint represents a power transmission budget for the relay device, this budget is better distributed for improving the quality of signals received by the destination device.

According to a particular feature, the information identifying source devices is obtained from the relay device and is an information identifying the source devices for which the relay device is able to decode said complex modulation symbols.

Thus, the relay device may be incorporated in the wireless telecommunications system in order to increase the quality of signals received by the destination device without requiring adaptation of the source devices. Off-the-shelf source devices can therefore be used.

According to a particular feature, the information identifying source devices is obtained from the destination device and is an information identifying the source devices for which the relay device has to apply the pre-coding, by using the pre-coding matrix, to said estimates.

Thus, the relay device may be incorporated in the wireless telecommunication system in order to increase the quality of signals received by the destination device without requiring adaptation of the source devices. Off-the-shelf source devices can therefore be used. In addition, low latency processing may be implemented.

According to a particular feature, the transmission power constraint is related to a global transmission power budget for a whole set of transmit antennas of the relay device or to individual transmission power budget for each transmit antenna of the relay device.

Thus, when a global budget is considered, the transmission power budget of the relay device is optimally used for cases where the maximal transmission power per device allowed by the specifications of the wireless telecommunications network is more limiting than the transmission power capability of the transmit antennas of the relay device. When individual budgets are considered, the transmission power budget of the relay device is optimally used for cases where the transmission power capability of each antenna of the relay device is more limiting than the maximal transmission power per device allowed by the specifications of the wireless telecommunications network.

According to a particular feature, the determining step consists in determining the pre-coding matrix corresponding to an extreme of a function depending on an interference between signals received by the destination device, said function being subject to a constraint corresponding to the transmission power constraint.

Thus, the pre-coding matrix can be obtained via computation in analytical form or in numerical form, and is determined to optimize the system performance.

According to a particular feature, said function represents an interference between signals received by the destination device, which remains after application, by the destination device, of a minimum mean square error filtering and the determined pre-coding matrix corresponds to a minima of said function.

Thus, when a minimum mean square error filtering is present in the destination device, the quality of signals and thus the performance of the destination device are improved.

According to a particular feature, said function represents a capacity of the transmission channel between the source devices and the destination device and the determined pre-coding matrix corresponds to a maxima of said function.

Thus, even when no minimum mean square error filtering is present in the destination device, the quality of signals and thus the performance of the destination device are improved.

According to a particular feature, the determining step consists in:

- determining the pre-coding matrix, corresponding to the extreme of the function, using a Lagrange multipliers method; or
- using a gradient descent method for iteratively determining the pre-coding matrix corresponding to the extreme of the function; or
- obtaining a plurality of pre-coding matrices and determining what pre-coding matrix from among the plurality of pre-coding matrices corresponds to the extreme of the function.

Thus, using a Lagrange multipliers method, the determining of the pre-coding matrix is accurate.

Thus, using a gradient descent method, a trade-off may be found between complexity and processing latency for the determining of the pre-coding matrix and the determining of the pre-coding matrix is kept simple and can be obtained in cases where computation in analytical form is not available.

Thus, by using a plurality of pre-coding matrices, the feedback of the pre-coding is reduced when said pre-coding matrices are not computed by the relay device.

The present invention also concerns a method for increasing a quality of signals received by a destination device of a wireless telecommunications network, as defined by claim 8.

Thus, the quality of signals received by the destination device is increased. In addition, the configuration takes practically into account the hardware power transmission constraints of the relay device that is introduced in the wireless telecommunications network in order to increase the quality of signals received by the destination device.

According to a particular feature, the first and second obtaining steps and the determining step are performed by the relay device and, in the second obtaining step, the first and second channel matrices are obtained from the destination device.

Thus, the relay device may be incorporated in the wireless telecommunications system in order to increase the quality of signals received by the destination device with limited adaptation of the destination device.

According to a particular feature, the first and second obtaining steps and the determining step are performed by a device other than the relay device, the first obtaining step consists in receiving the information from the relay device and, in the second obtaining step, the first and second channel matrices are obtained from the destination device and the method comprises a step, performed by said other device, of transmitting the determined pre-coding matrix to the relay device.

Thus, the design of the relay device may be kept simple.

According to a particular feature, the first and second obtaining steps and the determining step are performed by a device other than the relay device and, in the second obtaining step, the first and second channel matrices are obtained from the destination device, and the first obtaining step and the determining step are repeated to obtain a plurality of pre-coding matrices corresponding to different information about source devices for which the relay device has to apply the pre-coding to respective complex modulation symbols or estimates of said complex modulation symbols, and the method comprises a step, performed by said other device, of transmitting the plurality of pre-coding matrices to the relay device.

Thus, a trade-off may be found between complexity of the relay device and processing latency for the determining of the pre-coding matrix.

The present invention also concerns a device for determining a configuration of a wireless telecommunications network, as defined by claim 10.

The present invention also concerns a system for increasing a quality of signals received by a destination device of a wireless telecommunications network as defined by claim 11.

The present invention also concerns, in at least one embodiment, a computer program that can be downloaded from a communication network and/or stored on a medium that can be read by a computer and run by a processor. This computer program comprises instructions for implementing the aforementioned methods in any one of their various embodiments, when said program is run by the processor.

The present invention also concerns an information storage means, storing a computer program comprising a set of instructions that can be run by a processor for implementing the aforementioned methods in any one of their various embodiments, when the stored information is read by a computer and run by a processor.

Since the features and advantages related to the device, to the system and to the computer program are identical to those already mentioned with regard to the corresponding aforementioned methods, they are not repeated here.

The characteristics of the invention will emerge more clearly from a reading of the following description of an example of embodiment, said description being produced with reference to the accompanying drawings, among which:

Fig. 1 schematically represents an architecture of a wireless telecommunications network in which the present invention may be implemented;
Fig. 2 schematically represents an architecture of a relay device of the telecommunications network of Fig. 1;
Fig. 3 schematically represents an algorithm for determining a pre-coding matrix to be used by the relay device in order to generate pre-coded complex modulation symbols;
Fig. 4 schematically represents an algorithm performed by the relay device for transmitting pre-coded complex modulation symbols to a destination device of the telecommunications network of Fig. 1, according to a first embodiment;
Fig. 5 schematically represents an algorithm performed by the relay device for transmitting pre-coded complex modulation symbols to the destination device, according to a second embodiment.

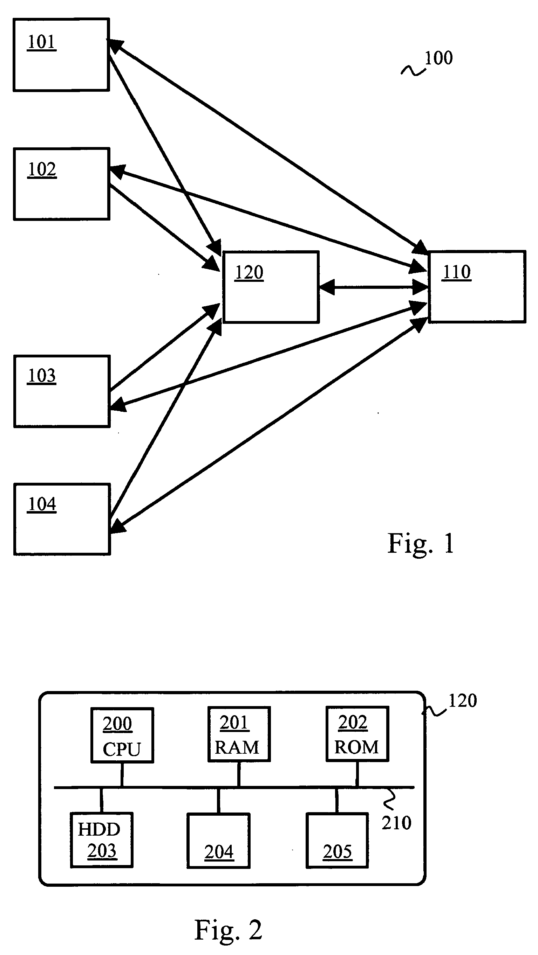

**Fig.1** schematically represents an architecture of a wireless telecommunications network in which the present invention may be implemented. The wireless telecommunications network 100 may be a local area network or a wireless cellular telecommunications network.

In the wireless telecommunications network 100, a plurality of source devices 101, 102, 103 and 104 transmit information words in the form of signals to a destination device 110 using a same frequency and time resource. In other words, the plurality of source devices 101, 102, 103 and 104 transmit signals that overlap in terms of transmission frequency or frequencies and that further overlap in terms of transmission time period or periods.

Let's denote N the number of source devices in the wireless telecommunications network 100.

The source devices 101, 102, 103 and 104 may be mobile terminals and the destination device 110 may be a base station, such as in the uplink context of a cellular telecommunications network. This environment may therefore be part of an uplink multi-user MIMO *(Multiple Input Multiple Output)* transmission system.

It has to be noted that the source devices 101, 102, 103 and 104 are shown as separated devices in Fig. 1, but the source devices 101, 102, 103 and 104 may be included in a single device. For instance, such a single source device may perform beamforming in order to transmit a plurality of flows of complex modulation symbols. In this case, each flow of complex modulation symbols is considered as being transmitted by a dedicated source device. In other words, it is considered herein that there is a one-to-one correspondence between source devices and flows of complex modulation symbols.

Each source device 101, 102, 103 and 104 transmits at least one information word in the form of a flow of complex modulation symbols to the destination device 110. As the flows of complex modulation symbols are transmitted on the same resource of the wireless telecommunications network 100, the flow of complex modulation symbols transmitted by one source device 101, 102, 103 or 104 may produce interference with the flow of complex modulation symbols transmitted by any one of the other source devices to the destination device 110.

Each source device 101, 102, 103 and 104 may comprise an encoder that encodes information words, which are further interleaved to produce coded bits. Encoding and interleaving are generally performed by a rate matching algorithm, such as the one used in the 3GPP-LTE (*Third Generation Partnership Project-Long Term Evolution*) standard, that allows generating vectors of any size from the information words or, in other words, that provides a wide range of possible coding rates.

The coded bits are then processed by a discrete modulation component, which may for instance be a QPSK (*Quadrature Phase Shift Keying*) modulator or a 16-QAM (*Quadrature Amplitude Modulation*) modulator, in order to obtain complex modulation symbols. The flows of complex modulation symbols may be generated by using the same modulation scheme or different modulation schemes. Each flow of complex modulation symbols may be generated by successively using different modulation schemes.

The source devices 101, 102, 103 and 104 may generate the complex modulation symbols without using the aforementioned encoder. The principle of the present invention would also operate in order to increase the quality of the signals received by the destination device 110, especially when an MMSE *(Minimum Mean Square Error)* filtering module is included in the destination device 110.

The information words are provided with redundancy check data, such as a CRC *(Cyclic Redundancy-Check)* portion. In the wireless telecommunications network 100, an HARQ *(Hybrid-ARQ* or *Hybrid Automatic Repeat reQuest)* mechanism is preferably used to provide retransmission capability from the source devices 100, 101, 102, 103 and 104 to the destination device 110. With such an HARQ mechanism, a transmission of redundancy data is performed when the destination device 100 indicates to the concerned source device that it is not able to successfully retrieve at least one transmitted information word. Such a situation occurs when the destination device 110 detects inconsistencies between the information word(s) and the concerned CRC data.

In order to increase the SINR and thus improve the quality of signals received by the destination device 110, the wireless telecommunications network 100 further comprises a relay device 120.

In at least one embodiment, the source devices 101, 102, 103 and 104 are not aware of the presence of the relay device 120 in the wireless telecommunications network 100.

In any case, the source devices 101, 102, 103 and 104 don't participate in the pre-coding detailed hereafter. This pre-coding is therefore exclusively performed by the relay device 120.

The relay device 120 is adapted to obtain at least one complex modulation symbol transmitted by at least one respective source device 101, 102, 103 or 104 or to obtain respective estimates of these complex modulation symbols.

The complex modulation symbols may be obtained by retrieving information words transmitted by the concerned source devices, and applying appropriate coding scheme, rate matching and modulation processes. It means that the relay device 120 is adapted to apply coding scheme, rate matching and modulation processes similar to those of the concerned source device 101, 102, 103 or 104.

Estimates of information word may also be obtained by using a data link from the source devices 101, 102, 103, 104 to the relay device 120, which can be a wireless link or a fixed access link.

The relay device 120 is further adapted to apply a pre-coding to the obtained complex modulation symbols, or estimates thereof, by using a pre-coding matrix P. The relay device 120 therefore generates pre-coded complex modulation symbols. The pre-coding matrix P is defined so as to improve the quality of the signals received at the destination device 110.

The relay device 120 is further adapted to transmit the pre-coded complex modulation symbols to the destination device 110. The destination device 110 thus receives complex modulation symbols from the source devices 101, 102, 103, 104 and from the relay device 120. It has to be further noted that the relay device 120 transmits the pre-coded complex modulation symbols using the same resource as the concerned source devices 101,102,103 or 104.

In one embodiment, in order to perform these transmissions of complex modulation symbols, the relay device 120 receives beforehand the concerned information words or the complex modulation symbols from the concerned source device 101, 102, 103 or 104. For instance, a dedicated communication link between the relay device 120 and the concerned source device 101, 102, 103 or 104 may be set up.

In another embodiment, the relay device 120 is able to use information words retrieved by applying a decoding to received complex modulation symbols. When the concerned source device 101, 102, 103 or 104 performs a retransmission of complex modulation symbols derived from these information words, the relay device 120 is therefore able to generate and transmit pre-coded complex modulation symbols from the retrieved information words. An occurrence of such a retransmission may be determined by capturing and analysing the feedback provided by the destination device 110 when an HARQ mechanism is used between the source devices 101, 102, 103, 104 and the destination device 110.

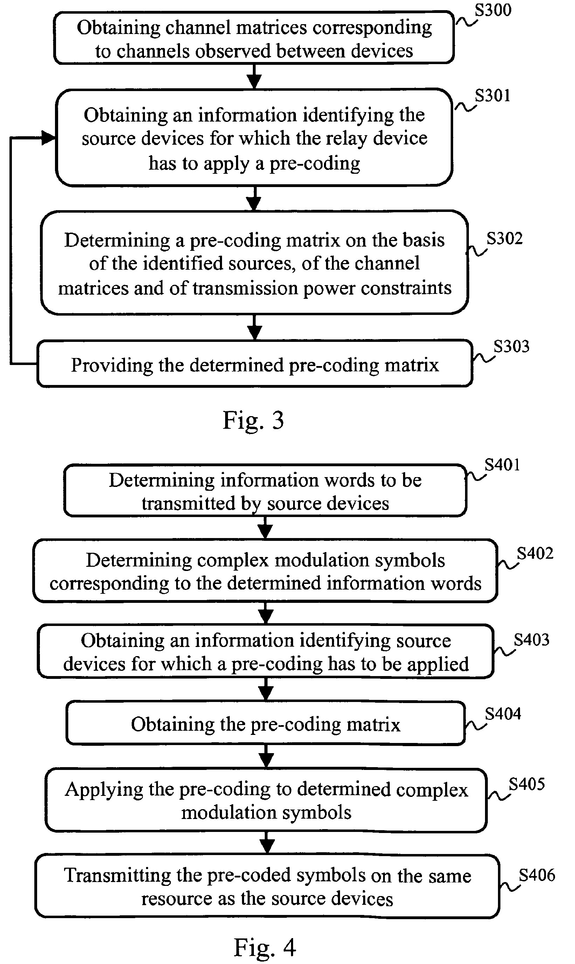

The computation and use of the aforementioned pre-coding matrix P is detailed hereafter with regard to Figs. 3,4 and 5.

The destination device 110 preferably comprises an MMSE filtering module to retrieve the complex modulation symbols transmitted by the source devices 101, 102, 103 and 104. The destination device 110 accordingly comprises a plurality of reception antennas in order to improve the decoding of the signals received from the source devices 101, 102, 103 and 104. However, after decoding as performed by the MMSE filtering module, interferences may remain.

Let's denote $X$ a vector of complex modulation symbols transmitted by the source devices 101, 102, 103 and 104 during a given period of time. The vector $X$ then corresponds to the aggregation of N complex modulation symbols $X_i$, where $i$ is an index used to identify each source device among the N source devices of the wireless telecommunications network 100. Upon reception of a vector Y of complex modulation symbols corresponding to the vector X, the destination device 110 performs an estimation of the vector $X$ and obtains an estimated *vector $\tilde{X}$* of complex modulation symbols. Using the MMSE filtering module, the estimated vector $\tilde{X}$ is obtained as follows:

$$\tilde{X} = WY$$

wherein:

$$W = ((G + FP\Delta_r)^{\dagger}(G + FP\Delta_r) + 2N_0 I_N)^{-1}(G + FP\Delta_r)^{\dagger}$$

$$Y = (G + FP\Delta_r)\, X + \eta$$

and:

- $G$ is a matrix corresponding to the concatenation of the N parallel channels observed between the source devices 101, 102, 103, 104 and the destination device 110. $G$ is therefore a channel matrix representing the transmission channel between the source devices 101, 102, 103, 104, and the destination device 110. The size of $G$ is $R$ x $N$, wherein $R$ is the number of receive antennas of the destination device 110;
- $\eta$ is the additive white Gaussian noise vector of size $N$ with variance $N_0$ per real dimension observed at each receive antenna of the destination device 110, which also encompasses the interference from the neighbouring transmission systems sharing the same resource, typically sharing the same transmission frequency or frequency range;
- $F$ is a matrix corresponding to the channel observed between the relay device 120 and the destination device 110. $F$ is therefore a channel matrix representing the transmission channel between the relay device 120 and the destination device 110. The size of $F$ is $R \times T_r$, wherein $T_r$ is the number of transmit antennas of the relay device 120;
- $\Delta_r$ is a diagonal matrix of size $N$ x $N$, with ones at positions $i$ on the diagonal corresponding to a selection of source devices for which the relay device 120 has to apply the pre-coding and with zeros elsewhere;
- $P$ is the pre-coding matrix, which size is $T_r \times N$; and
- $I$ is an identity matrix and more precisely $IN$ is an identity matrix of size $N$.

It has to be noted that, for a given matrix $M$, $M^{\dagger}$ represents the transpose conjugate *of M.*

The channel matrices $G$ and $F$ are preferably scaled by the transmission power of the source devices 101, 102, 103, 104 and of the relay device 120 respectively, and also take into account the channel wide band attenuation.

The pre-coding matrix may be understood as the association of the matrices $\Delta_r$ and P, and more particularly as the product $P\Delta_r$.

It is proposed to determine and further adapt the pre-coding matrix P in order to improve the SINR associated with the signals received by the destination device 110, as detailed hereafter with regard to Figs. 3, 4 and 5.

**Fig. 2** schematically represents an architecture of the relay device 120. According to the shown architecture, the relay device 120 comprises the following components interconnected by a communications bus 210: a processor, microprocessor, microcontroller or CPU *(Central Processing Unit)* 200; a RAM *(Random-Access Memory)* 201; a ROM *(Read-Only Memory)* 202; a HDD *(Hard-Disk Drive)* 203, or any other device adapted to read information stored on storage means; a first wireless communication interface 204 and a second wireless communication interface 205.

CPU 200 is capable of executing instructions loaded into RAM 201 from ROM 202 or from an external memory, such as HDD 203. After the relay device 120 has been powered on, CPU 200 is capable of reading instructions from RAM 201 and executing these instructions. The instructions form one computer program that causes CPU 200 to perform some or all of the steps of the algorithms described hereafter with regard to Figs. 3,4 and 5.

Any and all steps of the algorithms described hereafter with regard to Figs. 3, 4 and 5 may be implemented in software by execution of a set of instructions or program by a programmable computing machine, such as a PC *(Personal Computer),* a DSP *(Digital Signal Processor)* or a microcontroller; or else implemented in hardware by a machine or a dedicated component, such as an FPGA *(Field-Programmable Gate Array)* or an ASIC *(Application-Specific Integrated Circuit).*

The wireless communication interface 204 enables the relay device 120 to receive signals from the source devices 101, 102, 103 and 104.

The wireless communication interface 205 enables the relay device 120 to transmit signals to the destination device 110. The wireless communication interface 205 may also enable the relay device 120 to receive signals from the destination device 110.

In another embodiment, the relay device 120 is not full-duplex, but is half-duplex. In this case, a single wireless communication interface is implemented and is alternatively used in reception and transmission mode.

It has to be noted that the destination device 110 may also be implemented on the basis of the architecture schematically shown in Fig. 2.

**Fig.3** schematically represents an algorithm for determining the pre-coding matrix P, according to at least one embodiment of the present invention. The algorithm of Fig. 3 aims at defining a configuration of the wireless telecommunications network 100, namely via setting the pre-coding matrix P, aiming at increasing the quality of signals received by the destination device 110 from at least one of the source devices 101, 102, 103 and 104.

The algorithm of Fig. 3 is described hereafter as being performed by the relay device 120. This algorithm may however be performed by a device other than the relay device 120, such as the destination device 110.

In a step S300, the relay device 120 obtains information about the channels observed between the source devices 101, 102, 103, 104 and the destination device 110, as well as between the relay device 120 and the destination device 110. Such information is provided by the destination device 110. The destination device 110 may obtain this information by short-term measurements performed on the channels. In the state of the art, this information is often referred to as short-term channel state information, and is practically suitable for slow-varying channel conditions. The destination device 110 may also obtain this information by long-term measurements performed on the channels, such as on the basis of the covariance matrices of the MIMO channels. In the state of the art, this information is often referred to as long-term channel state information, and is practically suitable for fast-varying channel conditions, or in systems with limited feedback. An approach for determining the channel state information is based on a training sequence, or pilot sequence, where a known signal is transmitted and the channel matrix representing the channel conditions is estimated using the combined knowledge of the transmitted and received signal. The destination device 110 may transmit to the relay device 120 the channel matrices $G$ and $F$, or channel state information to allow the relay device 120 to build them.

In other words, the relay device 120 obtains the channel matrices $G$ and $F$.

In a following step S301, the relay device 120 obtains an information identifying the source devices for which the relay device 120 has to apply the pre-coding. This information is provided by the destination device 110 and is determined by the destination device 110, as already mentioned. This information may identify one or more source devices.

In a following step S302, the relay device 120 determines the pre-coding matrix $P$, on the basis of the information identifying at least one source device, of the channel matrices obtained in the step S300 and of a transmission power constraint. This transmission power constraint allows determining coefficients of the pre-coding matrix $P$ that meet the requirements of the transmission power specifications or characteristics of the relay device 120 and/or more generally of the wireless telecommunications network 100. Such requirements of the wireless telecommunications network 100 may be defined by governmental regulations.

In at least one embodiment as described hereafter, the relay device 120 determines the pre-coding matrix P that corresponds to an extreme of a function depending on an interference between signals received by the destination device, said function being subject to a constraint corresponding to the transmission power constraint.

In one embodiment, the transmission power constraint is related to a global transmission power budget for the whole set of the $T_r$ transmit antennas of the relay device 120. Thus, when such a global budget is considered, the transmission power budget of the relay device 120 is optimally used for cases where the maximal transmission power per device allowed by the specifications of the wireless telecommunications network 100 is more limiting than the transmission power capability of the transmit antennas of the relay device 120. In this case, the transmission power constraint $h(P)$ may be expressed as follows, on the basis of a trace function:

$$h(P) = Trace\left(\Delta_r{}^\dagger P^\dagger P \Delta_r\right) - T_r$$

In another embodiment, the transmission power constraint is related to an individual transmission power budget for each transmit antenna of the relay device 120. Thus, when such individual budgets are considered, the transmission power budget of the relay device 120 is optimally used for cases where the transmission power capability of each antenna of the relay device 120 is more limiting than the maximal transmission power per device allowed by the specifications of the wireless telecommunications network 100. In this case, the transmission power constraint h(P) may be expressed as follows, on the basis of computing a determinant, assuming that $N$ is larger than $T_r$:

$$h(P) = \det(PP^{\dagger} - I_{Tr})$$

wherein $I_{Tr}$ is an identity matrix of size $T_r$.

The aforementioned expressions of the transmission power constraint $h(P)$ allow guaranteeing that the pre-coding matrix $P$ respects the power maxima defined by the transmission power budget.

In the embodiments detailed hereafter, the transmission power constraint $h(P)$ is related to a global transmission power budget for the whole set of the $T_r$ transmit antennas of the relay device 120.

As aforementioned, the relay device 120 may determine the pre-coding matrix $P$ that corresponds to an extreme of a function depending on an interference between signals received by the destination device 110. This function may represent the level of interference $\varepsilon(P)$ that remains after filtering by an MMSE filtering module. The pre-coding matrix P corresponds in this case to a minima of such function.

Using an MMSE filtering module at the destination device 110, the remaining level of interference plus noise $\varepsilon(P)$, after filtering by the MMSE filtering module, is expressed as follows:

$$\varepsilon(P) = Trace\big(I - W(G + FP\Delta_r)\big)$$

Therefore:

$$\varepsilon(P) = 2N_0\, Trace\big(((G + FP\Delta_r)^{\dagger}(G + FP\Delta_r) + 2N_0 I_N)^{-1}\big)$$

The relay device 120 determines the pre-coding matrix P so that it reduces the remaining level of interference plus noise $\varepsilon(P)$, taking into account the transmission power constraint h(P). In other words, the relay device 120 targets a pre-coding matrix P that corresponds to a minima of a function representing an interference between signals received by the destination device 110, said function being subject to a constraint corresponding to the transmission power constraint.

In one embodiment, the relay device 120 determines the pre-coding matrix $P$ corresponding to, in a Lagrange multipliers method, an extreme of a function depending on an interference between signals received by the destination device 110, said function being subject to a constraint corresponding to the transmission power constraint. The Lagrange multipliers method applied to the aforementioned expressions of $\varepsilon(P)$ and h(P) is as follows :

$$\begin{cases} f(P,\lambda) = 2N_0\, Trace(((G + FP\Delta_r)^{\dagger}(G + FP\Delta_r) + 2N_0 I_N)^{-1}) - \lambda h(P) \\[2mm] \dfrac{\partial f(P,\lambda)}{\partial P} = -2N_0 F^{\dagger}(G + FP\Delta_r)((G + FP\Delta_r)^{\dagger}(G + FP\Delta_r) + 2N_0 I_N)^{-2}\,\Delta_r - \lambda\dfrac{\partial h(P)}{\partial P} \\[2mm] \dfrac{\partial f(P,\lambda)}{\partial P} = 0 \\[2mm] \dfrac{\partial f(P,\lambda)}{\partial \lambda} = h(P) = 0 \end{cases}$$

The relay device 120 therefore determines the pre-coding matrix $P$ that solves this system of equations, wherein $\lambda$ represents the Lagrange multiplier.

As a remark, if h(P) = $Trace\,(\Delta_r{}^{\dagger}\, P^{\dagger}\Delta_r)$ - $T_r$, then:

$$\frac{\partial h(P)}{\partial P} = P\,\Delta_r$$

In another embodiment, the relay device 120 determines the pre-coding matrix $P$ by using an iterative optimization algorithm, such as for instance a gradient descent. The gradient descent method is used to iteratively determine the pre-coding matrix $P$ that corresponds to an extreme of a function depending on interference between signals received by the destination device 110, said function being subject to a constraint corresponding to the transmission power constraint. The gradient descent method applied to the aforementioned expressions of $\varepsilon(P)$ and $h(P)$ is as follows:

$$\hat{P}_{k+1} = P_k - \mu \frac{\partial \varepsilon(P)}{\partial P^*}$$

wherein $P^*$ is the complex conjugate of $P$.

Therefore:

$$\hat{P}_{k+1} = P_k + 2\mu N_0 F^\dagger (G + FP\Delta_r)((G + FP\Delta_r)^\dagger (G + FP\Delta_r) + 2N_0 I_N)^{-2} \Delta_r$$

wherein $\mu$ represents a predefined convergence parameter *and* $k$ represents the index of iteration.

The convergence parameter $\mu$ may be set to a value obtained by field tests.

The initial matrix $P_0$ may be arbitrarily defined or selected from among a predefined set of pre-coding matrices.

The relay device 120 then checks if the resulting matrix $\hat{P}_{k+1}$ meets the requirements of the transmission power constraint $h(P)$. If these requirements are met, the relay device 120 considers that it has found a suitable pre-coding matrix $P$. Otherwise, another iteration is performed wherein $\hat{P}_{k+1}$ becomes $P_k$.

In other words, $\hat{P}_{k+1}$ is projected on the transmission power constraint $h(P)$ as follows, and iterations are performed until convergence of $\hat{P}_{k+1}$ and $P_{k+1}$:

$$P_{k+1} = \hat{P}_{k+1}. \left. Tr \middle/ Trace\left(\Delta_r^\dagger \hat{P}_{k+1}^\dagger \hat{P}_{k+1} \Delta_r\right) \right.$$

In yet another embodiment, the relay device 120 stores a plurality of pre-coding matrices. The relay device 120 determines what pre-coding matrix from among the plurality corresponds to an extreme of a function depending on an interference between signals received by the destination device 110, said function being subject to a constraint corresponding to the transmission power constraint. In other words, the relay device 120 determines, for each matrix of this plurality, the remaining level of interference plus noise $\varepsilon(P)$, taking into account the transmission power constraint $h(P)$. The relay device 120 then selects, if any, the matrix that minimizes the remaining level of interference plus noise $\varepsilon(P)$, while meeting the requirements of the transmission power constraint $h(P)$. The selected matrix then becomes the pre-coding matrix P to be applied by the relay device 120 in order to generate pre-coded complex modulation symbols.

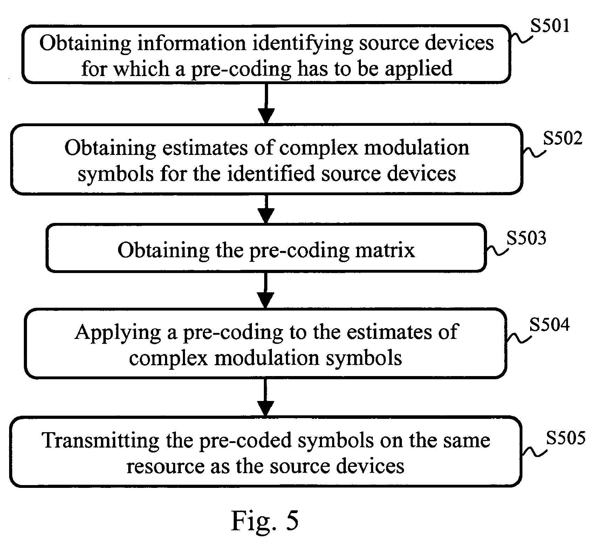

In a following step S303, the relay device 120 transmits the determined pre-coding matrix P to the destination device 110. Then, the step S301 may be repeated to take into account any change of the information identifying the source devices for which the pre-coding has to be applied, and the relay device 120 updates the pre-coding matrix P accordingly. Such a change of the information identifying the source devices is detailed hereafter with regard to steps S403 and S501 of Figs. 4 and 5 respectively.

In another embodiment, pre-coded pilots are used in the wireless transmission from the relay device 120 to the destination device 110. It is therefore not necessary that the relay device 120 transmits the determined pre-coding matrix P to the destination device 110. In this case, the destination device 110 is able to obtain an estimation of the product $FP$.

In yet another embodiment, the pre-coding matrix P is determined by the destination device 110. According to this embodiment, the steps S301 to S303 of the algorithm of Fig. 3 are applied in an analogous manner by the destination device 110. In the step S301, the destination device 110 obtains, from the relay device 120, an information identifying the sources for which the pre-coding has to be applied. This information may be determined by the destination device 110, or received from the relay device 120, as detailed hereafter with regard to Figs. 4 and 5. In the step S302, the destination device 110 accordingly determines the pre-coding matrix P. Then, in the step S303, the destination device 110 transmits the determined pre-coding matrix P to the relay device 120.

In yet another embodiment, a plurality of pre-coding matrices is determined by the destination device 110. Each pre-coding matrix then corresponds to a given subset of successfully decoded complex modulation symbols transmitted by the source devices 101, 102, 103 and 104. The plurality of pre-coding matrices is then provided by the destination device 110 to the relay device 120 and the relay device 120 selects the pre-coding matrix P from among the plurality of pre-coding matrices according to the subset of sources for which a pre-coding has to be applied.

In yet another embodiment, the pre-coding matrix P is determined by a device other than the relay device 120 and the destination device 110. This other device collects the necessary information from the relay device 120 and/or the destination device 110 and provides the pre-coding matrix P or a plurality of pre-coding matrices to the relay device 120, in a same manner as aforementioned. This other device may, or not, be actually part of the wireless telecommunications network 100. For instance, this other device may be connected to the relay device 120 by a wired link.

The algorithm of Fig. 3 may be periodically executed or be executed when transmission channel conditions change between any source device 101, 102, 103 or 104 and the destination device 110 and/or between the relay device 120 and the destination device 110.

It may further be noted that, if no pre-coding matrix meeting the requirements of the transmission power constraint is found, the relay device 120 doesn't transmit complex modulation symbols to the destination device 110.

In may further be noted that such a pre-coding matrix $P$ can be used in order to increase the quality of the signals received by the destination device 110 upstream from the MMSE filtering module or even when the destination device 110 doesn't include an MMSE filtering module.

As aforementioned, the relay device 120 may determine the pre-coding matrix $P$ that corresponds to an extreme of a function depending on an interference between signals received by the destination device 110. This function may in this case represent the capacity of the transmission channel between the source devices 101, 102, 103, 104 and the destination device 110. The pre-coding matrix $P$ corresponds in this case to a maxima of such function, or equivalently to a minima of the additive inverse function.

It can be noticed that the overall performance of the wireless telecommunications network 100 is increased if at least one of the capacities $C_j(P)$ of the link from one source device 101, 102, 103, 104 to the destination device 110 is improved:

$$C_j(P) = log_2 \Big( \det \big( [2N_0 I_R + (G + FP\Delta_r)(G + FP\Delta_r)^\dagger] [(G + FP\Delta_r)(I_N - D_j)(G + FP\Delta_r)^\dagger + 2N_0 I_R]^{-1} \big) \Big)$$

wherein $j$ is an index identifying the considered source device, and
wherein $D_j$ is a matrix with only coefficient equal to 1 on the j-th diagonal position and with zeros elsewhere. One may minimize the function g(P) such that:

$$g(P) = - \sum_{j=1}^{N} C_j(P)$$

with

$$\frac{\partial g(P)}{\partial P^*} = - \frac{N}{ln(2)} \Big[ F^\dagger \big( (G + FP\Delta_r)(G + FP\Delta_r)^\dagger + 2N_0 I_R \big)^{-1} (G + FP\Delta_r)\Delta_r^\dagger \Big]$$

$$+ \frac{1}{ln(2)} \sum_{j=1}^{N} \Big[ F^\dagger \big( (G + FP\Delta_r)(I_N - D_j)(G + FP\Delta_r)^\dagger + 2N_0 I_R \big)^{-1} (G + FP\Delta_r)(I_N - D_j)\Delta_r^\dagger \Big]$$

It can be noted that the methods for determining the pre-coding matrix P by using a Lagrange multipliers method, a gradient descent method or by using a selection among a plurality of predetermined pre-coding matrices, may also be similarly applied in the context of the function representing the capacity of the transmission channel between the source devices 101, 102, 103, 104 and the destination device 110.

**Fig. 4** schematically represents an algorithm performed by the relay device 120 for transmitting pre-coded complex modulation symbols to the destination device 110, according to a first embodiment.

In a step S401, the relay device 120 determines information words to be transmitted by at least one source device 101, 102, 103, 104.

In one embodiment, the relay device 120 receives beforehand these information words from the concerned source device(s) 101, 102, 103, 104.

In another embodiment, the relay device 120 is further adapted to receive the flows of complex modulation symbols transmitted by the source devices 101, 102, 103, 104, and makes attempts to retrieve the information words from which the received complex modulation symbols are derived by applying a decoding to the received complex modulation symbols. The relay device 120 is therefore able to use the retrieved information words when the concerned source device 101, 102, 103 or 104 performs a retransmission of these information words.

An occurrence of such a retransmission may be determined by capturing and analysing the feedback provided by the destination device 110 when an HARQ mechanism is used between the source devices 101, 102, 103, 104 and the destination device 110.

In a following step S402, the relay device 120 determines complex modulation symbols corresponding to, or derived from, the determined information words.

In the following step S403, the relay device 120 obtains an information identifying at least one source device among the source devices 101, 102, 103, 104, for which a pre-coding has to be applied.

This information corresponds to the source device(s) for which the relay device 120 succeeded, in the step S401, in determining the information words that said source device(s) will transmit.

In a variant, this information is provided by the destination device 110. The destination device 110 may provide to the relay device 120 an information identifying the source device(s) for which the destination device 110 succeeded in retrieving the information words, or as an alternative, an information identifying the source device(s) for which the destination device 110 didn't succeed in retrieving the information words. The relay device 120 then uses the information provided by the destination device 110, for determining the source device(s) for which an increasing of the quality of signals, as received by the destination device 110, is targeted. This allows the relay device 120 to obtain a pre-coding matrix P that focuses the distribution of its transmission power on the signals that are not yet decoded by the destination device 110.

For example, the destination device 110 selects a given number of source devices (at least one) for which the received signals exhibit the lowest performance.

In another embodiment, the destination device 110 determines several pre-coding matrices according to respective selections of at least one source device for which a pre-coding has to be applied by the relay device 120, and selects the pre-coding matrix P providing the best gain to the system, or minimizing the remaining level of interference plus noise $\varepsilon(P)$. The destination device 110 may then transmit to the relay device 120 an information about the resulting selection of at least one source device. The relay device 120 may then retrieve the pre-coding matrix P, as computed by the destination device 110, by locally performing the steps of the algorithm of Fig. 3.

In a following step S404, the relay device 120 applies a pre-coding to the determined complex modulation symbols, on the basis of the pre-coding matrix P determined at the step S302. This step enables the relay device 120 to generate pre-coded complex modulation symbols.

The steps S403 and S404 may be repeated when a change of the information identifying the source device(s) for which the pre-coding has to be applied occurs.

Such a change may occur during the transmission of complex modulation symbols. Indeed, when two source devices transmit complex modulation symbols on the same resource, one of these source devices may end its transmission before the other source device. Therefore, a switch from one pre-coding matrix to another may be performed during the transmission of said other source device. This allows optimizing the distribution of the transmission power at the relay device 120 for increasing the quality of signals still under transmission.

In a following step S404, the relay device 120 transmits to the destination device 110 the pre-coded complex modulation symbols obtained during the step S403.

Therefore, by using the pre-coding matrix *P*, the relay device 120 transmits to the destination device 110 precoded complex modulation symbols that allow the increasing of the quality of the signals received by the destination device 110, and in particular, the increasing of the SINR of the signals transmitted by at least one of the source devices 101,102,103,104.

**Fig. 5** schematically represents an algorithm performed by the relay device 120 for transmitting pre-coded complex modulation symbols to the destination device 110, according to a second embodiment.

In the step S501, the relay device 120 obtains an information identifying at least one source device 101, 102, 103 or 104 for which a pre-coding has to be applied. This information is preferably provided by the destination device 110. As already mentioned with regard to Fig. 4, the destination device 110 may provide to the relay device 120 an information identifying the source device(s) for which the destination device 110 succeeded in retrieving the information words, or as an alternative, an information identifying the source device(s) for which the destination device 110 didn't succeed in retrieving the information words. The relay device 120 then uses the information provided by the destination device 110, for determining the source device(s) for which an increasing of the quality of signals, as received by the destination device 110, is targeted.

In a following step S502, the relay device 120 obtains estimates of complex modulation symbols to be transmitted by the identified at least one source device. These estimates may correspond to complex modulation symbols as received by the relay device 120 from source devices, potentially amplified. These estimates of the complex modulation symbols as transmitted by the identified source devices are then used by the relay device 120 as input to the pre-coding matrix *P* in order to generate pre-coded complex modulation symbols.

In a following step S503, the relay device 120 obtains the pre-coding matrix *P* as described with regard to Fig. 3 and applies the pre-coding to the estimates of complex modulation symbols, on the basis of the obtained pre-coding matrix *P*. This step enables the relay device 120 to generate the pre-coded complex modulation symbols.

Similarly as for the steps S403 and S404 of Fig. 4, the steps S502 and S503 may be repeated when a change of the information identifying the source device(s) for which a pre-coding has to be applied occurs.

In a following step S504, the relay device 120 transmits to the destination device 110 the pre-coded complex modulation symbols obtained during the step S503.

Therefore, by using the pre-coding matrix *P*, the relay device 120 transmits to the destination device 110 pre-coded complex modulation symbols that allow the increasing of the quality of the signals received by the destination device 110, and in particular, the increasing of the SINR of the signals transmitted by at least one of the source devices 101,102, 103, 104.

**Claims**

1. A method for determining a configuration of a wireless telecommunications network (100), the configuration aiming at increasing a quality of signals received by a destination device (110) of the wireless telecommunications network, the signals resulting from a plurality of complex modulation symbols transmitted on a same resource by respective source devices (101, 102, 103, 104) of the wireless telecommunications network, the method comprising the following steps:

   - a first obtaining step (S301) of obtaining an information identifying source devices for which a relay device (120) of the wireless telecommunications network has to apply a pre-coding to respective complex modulation symbols or for which the relay device has to apply the pre-coding to respective estimates of said complex modulation symbols;
   - a second obtaining step (S300) of obtaining a first channel matrix *G* representing a transmission channel between the source devices and the destination device and a second channel matrix *F* representing a transmission channel between the relay device and the destination device;

   **characterized in that** it comprises:

   - a determining step (S302) of determining a pre-coding matrix $P\Delta_r$ aiming at being used by the relay device for applying the pre-coding to be able to transmit pre-coded complex modulation symbols, on the same resource as the complex modulation symbols transmitted by the source devices, in order to increase the quality of signals received by the destination device,

   the pre-coding matrix being determined on the basis of the obtained information identifying source devices, of the first and second channel matrices and of a transmission power constraint applicable to the relay device, such that the destination device is able to determine estimates $\tilde{X}$ of the complex modulation symbols from complex modulation symbols Y received by the destination device as follows:

   $$\tilde{X} = ((G + FP\Delta_r)^{\dagger}(G + FP\Delta_r) + 2N_0 I_N)^{-1}(G + FP\Delta_r)^{\dagger} Y$$

   wherein $\Delta_r$ is a diagonal matrix with ones at positions corresponding to the obtained information identifying source devices and with zeros elsewhere, $I_N$ is an identity matrix, and $N_0$ is the variance of an additive white Gaussian noise; and **in that** said same resource is a same time and frequency resource and **in that** the information identifying source devices is obtained from the relay device and is an information identifying the source devices for which the relay device is able to decode said complex modulation symbols.

2. The method according to claim 1, **characterized in that** the first and second obtaining steps and the determining step are repeated when a change of the information identifying source devices occurs.

3. The method according to any one of claims 1 and 2, **characterized in that** the transmission power constraint is related to a global transmission power budget for a whole set of transmit antennas of the relay device or to individual transmission power budget for each transmit antenna of the relay device.

4. The method according to any one of claims 1 to 3, **characterized in that** the determining step consists in determining the pre-coding matrix corresponding to an extreme of a function depending on an interference between signals received by the destination device, said function being subject to a constraint corresponding to the transmission power constraint.

5. The method according to claim 4, **characterized in that** said function represents an interference between signals received by the destination device, which remains after application, by the destination device, of a minimum mean square error filtering and **in that** the determined pre-coding matrix corresponds to a minima of said function.

6. The method according to claim 4, **characterized in that** said function represents a capacity of the transmission channel between the source devices and the destination device and **in that** the determined pre-coding matrix corresponds to a maxima of said function.

7. The method according to any one of claims 4 to 6, **characterized in that** the determining step consists in:

   - determining the pre-coding matrix, corresponding to the extreme of the function, using a Lagrange multipliers method; or
   - using a gradient descent method for iteratively determining the pre-coding matrix corresponding to the extreme of the function; or
   - obtaining a plurality of pre-coding matrices and determining what pre-coding matrix from among the plurality of pre-coding matrices corresponds to the extreme of the function.

8. A method for increasing a quality of signals received by a destination device (110) of a wireless telecommunications network (100), the signals resulting from a plurality of complex modulation symbols transmitted on a same resource by respective source devices (101, 102, 103, 104) of the wireless telecommunications network, the method comprising the following steps:

   - a first obtaining step (S301) of obtaining an information about source devices for which a relay device (120) of the wireless telecommunications network has to apply a pre-coding to respective complex modulation symbols or for which the relay device has to apply a pre-coding to respective estimates of said complex modulation symbols;
   - a second obtaining step (S300) of obtaining a first channel matrix $G$ representing a transmission channel between the source devices and the destination device and a second channel matrix $F$ representing a transmission channel between the relay device and the destination device;

   **characterized in that** it comprises:

   - a determining step (S302) of determining a pre-coding matrix $P\Delta_r$ aiming at increasing the quality of signals received by the destination device, the pre-coding matrix being determined on the basis of the obtained information identifying source devices of the first and second channel matrices and of a power transmission constraint applicable to the relay device, such that the destination device is able to determine estimates $\tilde{X}$ of the complex modulation symbols from complex modulation symbols $Y$ received by the destination device as follows:

$$\tilde{X} = ((G + FP\Delta_r)^\dagger (G + FP\Delta_r) + 2N_0 I_N)^{-1}(G + FP\Delta_r)^\dagger Y$$

wherein $\Delta_r$ is a diagonal matrix with ones at positions corresponding to the obtained information identifying source devices and with zeros elsewhere, $IN$ is an identity matrix, and $N_0$ is the variance of an additive white Gaussian noise; and the relay device performing:

   - a pre-coding step (S405; S504) of applying the pre-coding to said complex modulation symbols or said estimates by using the determined pre-coding matrix, in order to generate pre-coded complex modulation symbols;
   - a transmitting step (S406; S505) of transmitting the pre-coded complex modulation symbols on the same resource as the complex modulation symbols transmitted by the source devices;

   and **in that** said same resource is a same time and frequency resource and **in that** the information identifying source devices is obtained from the relay device and is an information identifying the source devices for which the relay device is able to decode said complex modulation symbols.

9. The method according to claim 8, **characterized in that** the first and second obtaining steps and the determining step are performed by the relay device and **in that**, in the second obtaining step, the first and second channel matrices are obtained from the destination device.

10. A device for determining a configuration of a wireless telecommunications network (100), the configuration aiming at increasing a quality of signals received by a destination device (110) of the wireless telecommunications network, the signals resulting from a plurality of complex modulation symbols transmitted on a same resource by respective source devices (101, 102, 103, 104) of the wireless telecommunications network, the claimed device comprising the following means:

- first obtaining means for obtaining (S301) an information about source devices for which a relay device (120) of the wireless telecommunications network has to apply a pre-coding to respective complex modulation symbols or for which the relay device has to apply the pre-coding to respective estimates of said complex modulation symbols;
- second obtaining means for obtaining (S300) a first channel matrix $G$ representing a transmission channel between the source devices and the destination device and a second channel matrix $F$ representing a transmission channel between the relay device and the destination device;

**characterized in that** it comprises:

- determining means for determining (S302) a pre-coding matrix $P\Delta_r$ aiming at being used by the relay device for applying the pre-coding to be able to transmit pre-coded complex modulation symbols, on the same resource as the complex modulation symbols transmitted by the source devices, in order to increase the quality of signals received by the destination device,

the determining means being adapted so that the pre-coding matrix is determined on the basis of the obtained information identifying source devices, of the first and second channel matrices and of a transmission power constraint applicable to the relay device, such that the destination device is able to determine estimates $\tilde{X}$ of the complex modulation symbols from complex modulation symbols $Y$ received by the destination device as follows:

$$\bar{X} = ((G + FP\Delta_r)^\dagger (G + FP\Delta_r) + 2N_0 I_N)^{-1} (G + FP\Delta_r)^\dagger Y$$

wherein $\Delta_r$ is a diagonal matrix with ones at positions corresponding to the obtained information identifying source devices and with zeros elsewhere, $I_N$ is an identity matrix, and $N_0$ is the variance of an additive white Gaussian noise; and **in that** said same resource is a same time and frequency resource and **in that** the information identifying source devices is obtained from the relay device and is an information identifying the source devices for which the relay device is able to decode said complex modulation symbols.

11. A system for increasing a quality of signals received by a destination device (110) of a wireless telecommunications network (100), the system aiming at being part of the wireless telecommunications network, the signals resulting from a plurality of complex modulation symbols transmitted on a same resource by respective source devices (101, 102, 103, 104) of the wireless telecommunications network, the system comprising a relay device (120) and:

- first obtaining means for obtaining (S301) an information about source devices for which the relay device of the wireless telecommunications network has to apply a pre-coding to respective complex modulation symbols or for which the relay device has to apply the pre-coding to respective estimates of said complex modulation symbols;
- second obtaining means for obtaining (S300) a first channel matrix $G$ representing a transmission channel between the source devices and the destination device and a second channel matrix $F$ representing a transmission channel between the relay device and the destination device;

**characterized in that** it comprises:

- determining means for determining (S302) a pre-coding matrix $P\Delta_r$ aiming at increasing the quality of signals received by the destination device, the determining means being adapted so that pre-coding matrix is determined on the basis of the obtained information identifying source devices, of the first and second channel matrices and of a power transmission constraint applicable to the relay device, such that the destination device is able to determine estimates $\tilde{X}$ of the complex modulation symbols from complex modulation symbols Y received by the destination device as follows:

$$\tilde{X} = ((G + FP\Delta_r)^{\dagger}(G + FP\Delta_r) + 2N_0 I_N)^{-1}(G + FP\Delta_r)^{\dagger} Y$$

wherein $\Delta_r$ is a diagonal matrix with ones at positions corresponding to the obtained information identifying source devices and with zeros elsewhere, *IN* is an identity matrix, and $N_0$ is the variance of an additive white Gaussian noise;

and the relay device comprising:

- pre-coding means for applying (S405; S504) the pre-coding to said complex modulation symbols or estimates by using the determined pre-coding matrix, in order to generate pre-coded complex modulation symbols;
- transmitting means for transmitting (S406; S505) the pre-coded complex modulation symbols on the same resource as the complex modulation symbols transmitted by the source devices;

and **in that** said same resource is a same time and frequency resource and **in that** the information identifying source devices is obtained from the relay device and is an information identifying the source devices for which the relay device is able to decode said complex modulation symbols.

## Patentansprüche

1. Verfahren zum Bestimmen einer Konfiguration eines drahtlosen Telekommunikationsnetzwerks (100), wobei die Konfiguration ein Erhöhen einer Qualität von durch eine Zielortvorrichtung (110) des drahtlosen Telekommunikationsnetzwerks empfangenen Signalen anstrebt, wobei die Signale aus einer Vielzahl von auf einem selben Betriebsmittel durch jeweilige Quellenvorrichtungen (101, 102, 103, 104) des drahtlosen Telekommunikationsnetzwerks gesendeten komplexen Modulationssymbolen resultieren, wobei das Verfahren die folgenden Schritte aufweist:

   - einen ersten Erhaltungsschritt (S301) eines Erhaltens einer Information, die Quellenvorrichtungen identifiziert, für welche eine Relaisvorrichtung (120) des drahtlosen Telekommunikationsnetzwerks ein Vorcodieren auf jeweilige komplexe Modulationssymbole anwenden muss oder für welche die Relaisvorrichtung das Vorcodieren auf jeweilige Schätzungen der komplexen Modulationssymbole anwenden muss;
   - einen zweiten Erhaltungsschritt (S300) eines Erhaltens einer ersten Kanalmatrix G, die einen Sendekanal zwischen den Quellenvorrichtungen und der Zielortvorrichtung darstellt, und einer zweiten Kanalmatrix F, die eine Sendekanal zwischen der Relaisvorrichtung und der Zielortvorrichtung darstellt;

   **dadurch gekennzeichnet, dass** es folgendes aufweist:

   - einen Bestimmungsschritt (S302) eines Bestimmens einer Vorcodiermatrix $P\Delta_r$, die anstrebt, durch die Relaisvorrichtung zum Anwenden des Vorcodierens verwendet zu werden, um vorcodierte komplexe Modulationssymbole auf demselben Betriebsmittel wie die durch die Quellenvorrichtungen gesendeten komplexen Modulationssymbole senden zu können, um die Qualität von durch die Zielortvorrichtung empfangenen Signalen zu erhöhen,

   wobei die Vorcodiermatrix bestimmt wird auf der Basis der erhaltenen Information, die Quellenvorrichtungen identifiziert, der ersten und zweiten Kanalmatrizen und einer Sendeleistungsbeschränkung, die auf die Relaisvorrichtung anwendbar ist, so dass die Zielortvorrichtung Schätzungen $\tilde{X}$ der komplexen Modulationssymbole aus durch die Zielortvorrichtung empfangenen komplexen Modulationssymbolen *Y* wie folgt bestimmen kann:

$$\tilde{X} = ((G + FP\Delta_r)^{\dagger}(G + FP\Delta_r) + 2N_0 I_N)^{-1}(G + FP\Delta_r)^{\dagger}Y$$

   wobei $\Delta_r$ eine Diagonalmatrix mit Einsen an Positionen entsprechend der erhaltenen Information, die Quellenvorrichtungen identifiziert, und sonst mit Nullen ist, $I_N$ eine Identitätsmatrix ist und $N_0$ die Varianz eines additiven weißen gaußschen Rauschens ist;

   und dass dasselbe Betriebsmittel ein Betriebsmittel derselben Zeit und Frequenz ist und dass die Information, die Quellenvorrichtungen identifiziert, von der Relaisvorrichtung erhalten wird und eine Information ist, die die Quellenvorrichtungen identifiziert, für welche die Relaisvorrichtung die komplexen Modulationssymbole decodieren kann.

2. Verfahren nach Anspruch 1, **dadurch gekennzeichnet, dass** der erste und der zweite Erhaltungsschritt und der Bestimmungsschritt wiederholt werden, wenn eine Änderung der Information, die Quellenvorrichtungen identifiziert, auftritt.

3. Verfahren nach einem der Ansprüche 1 und 2, **dadurch gekennzeichnet, dass** die Sendeleistungsbeschränkung auf ein globales Sendeleistungsbudget für einen gesamten Satz von Sendeantennen der Relaisvorrichtung oder auf ein individuelles Sendeleistungsbudget für jede Sendeantenne der Relaisvorrichtung bezogen ist.

4. Verfahren nach einem der Ansprüche 1 bis 3, **dadurch gekennzeichnet, dass** der Bestimmungsschritt im Bestimmen der Vorcodiermatrix entsprechend einem Extremum einer Funktion besteht, die von einer Interferenz zwischen durch die Zielortvorrichtung empfangenen Signalen abhängt, wobei die Funktion einer Beschränkung entsprechend der Sendeleistungsbeschränkung unterzogen wird.

5. Verfahren nach Anspruch 4, **dadurch gekennzeichnet, dass** die Funktion eine Interferenz zwischen durch die Zielortvorrichtung empfangenen Signalen darstellt, welche nach einer Anwendung eines Filters gemäß einem minimalen mittleren quadratischen Fehler durch die Zielortvorrichtung bleibt, und dass die bestimmte Vorcodiermatrix einem Minimum der Funktion entspricht.

6. Verfahren nach Anspruch 4, **dadurch gekennzeichnet, dass** die Funktion eine Kapazität des Sendekanals zwischen den Quellenvorrichtungen und der Zielortvorrichtung darstellt und dass die bestimmte Vorcodiermatrix einem Maximum der Funktion entspricht.

7. Verfahren nach einem der Ansprüche 4 bis 6, **dadurch gekennzeichnet, dass** der Bestimmungsschritt in folgendem besteht:

   - Bestimmen der Vorcodiermatrix entsprechend dem Extremum der Funktion unter Verwendung einer Lagrange-Multiplikator-Methode; oder
   - Verwenden eines Gradientenabstiegsverfahrens zum iterativen Bestimmen der Vorcodiermatrix entsprechend dem Extremum der Funktion; oder
   - Erhalten einer Vielzahl von Vorcodiermatrizen und Bestimmen, welche Vorcodiermatrix unter der Vielzahl von Vorcodiermatrizen dem Extremum der Funktion entspricht.

8. Verfahren zum Erhöhen einer Qualität von durch eine Zielortvorrichtung (110) eines drahtlosen Telekommunikationsnetzwerks (100) empfangenen Signalen, wobei die Signale aus einer Vielzahl von auf einem selben Betriebsmittel durch jeweilige Quellenvorrichtungen (101, 102, 103, 104) des drahtlosen Telekommunikationsnetzwerks gesendeten komplexen Modulationssymbolen resultieren, wobei das Verfahren die folgenden Schritte aufweiset:

   - einen ersten Erhaltungsschritt (S301) eines Erhaltens einer Information über Quellenvorrichtungen, für welche eine Relaisvorrichtung (120) des drahtlosen Telekommunikationsnetzwerks ein Vorcodieren auf jeweilige komplexe Modulationssymbole anwenden muss oder für welche die Relaisvorrichtung ein Vorcodieren auf jeweilige Schätzungen der komplexen Modulationssymbole anwenden muss;
   - einen zweiten Erhaltungsschritt (S300) eines Erhaltens einer ersten Kanalmatrix G, die einen Sendekanal zwischen den Quellenvorrichtungen und der Zielortvorrichtung darstellt, und einer zweiten Kanalmatrix F, die eine Sendekanal zwischen der Relaisvorrichtung und der Zielortvorrichtung darstellt;

   **dadurch gekennzeichnet, dass** es folgendes aufweist:

   - einen Bestimmungsschritt (S302) eines Bestimmens einer Vorcodiermatrix $P\Delta_r$, die ein Erhöhen der Qualität von durch die Zielortvorrichtung empfangenen Signalen anstrebt, wobei die Vorcodiermatrix bestimmt wird auf der Basis der erhaltenen Information, die Quellenvorrichtungen identifiziert, der ersten und zweiten Kanalmatrizen und einer Sendeleistungsbeschränkung, die auf die Relaisvorrichtung anwendbar ist, so dass die Zielortvorrichtung Schätzungen $\tilde{X}$ der komplexen Modulationssymbole aus durch die Zielortvorrichtung empfangenen komplexen Modulationssymbolen Y wie folgt bestimmen kann:

$$\tilde{X} = ((G + FP\Delta_r)^{\dagger}(G + FP\Delta_r) + 2N_0 I_N)^{-1}(G + FP\Delta_r)^{\dagger}Y$$

wobei $\Delta_r$ eine Diagonalmatrix mit Einsen an Positionen entsprechend der erhaltenen Information, die Quellenvorrichtungen identifiziert, und sonst mit Nullen ist, $I_N$ eine Identitätsmatrix ist und $N_0$ die Varianz eines additiven weißen gaußschen Rauschens ist;
und die Relaisvorrichtung folgendes durchführt:
- einen Vorcodierschritt (S405; S504) eines Anwendens des Vorcodierens auf die komplexen Modulationssignale oder die Schätzungen durch Verwenden der bestimmten Vorcodiermatrix, um vorcodierte komplexe Modulationssymbole zu erzeugen;
- einen Sendeschritt (S406, S505) eines Sendens der vorcodierten komplexen Modulationssymbole auf demselben Betriebsmittel wie die durch die Quellenvorrichtungen gesendeten komplexen Modulationssymbole;

und dass dasselbe Betriebsmittel ein Betriebsmittel derselben Zeit und Frequenz ist und dass die Information, die Quellenvorrichtungen identifiziert, von der Relaisvorrichtung erhalten wird und eine Information ist, die die Quellenvorrichtungen identifiziert, für welche die Relaisvorrichtung die komplexen Modulationssymbole decodieren kann.

9. Verfahren nach Anspruch 8, **dadurch gekennzeichnet, dass** der erste und der zweite Erhaltungsschritt und der Bestimmungsschritt durch die Relaisvorrichtung durchgeführt werden und dass bei dem zweiten Erhaltungsschritt die ersten und zweiten Kanalmatrizen von der Zielortvorrichtung erhalten werden.

10. Vorrichtung zum Bestimmen einer Konfiguration eines drahtlosen Telekommunikationsnetzwerks (100), wobei die Konfiguration ein Erhöhen einer Qualität von durch eine Zielortvorrichtung (110) des drahtlosen Telekommunikationsnetzwerks empfangenen Signalen anstrebt, wobei die Signale aus einer Vielzahl von auf einem selben Betriebsmittel durch jeweilige Quellenvorrichtungen (101, 102, 103, 104) des drahtlosen Telekommunikationsnetzwerks gesendeten komplexen Modulationssymbolen resultieren, wobei die beanspruchte Vorrichtung die folgenden Mittel aufweist:

- ein erstes Erhaltungsmittel zum Erhalten (S301) einer Information über Quellenvorrichtungen, für welche eine Relaisvorrichtung (120) des drahtlosen Telekommunikationsnetzwerks ein Vorcodieren auf jeweilige komplexe Modulationssymbole anwenden muss oder für welche die Relaisvorrichtung das Vorcodieren auf jeweilige Schätzungen der komplexen Modulationssymbole anwenden muss;
- ein zweites Erhaltungsmittel zum Erhalten (S300) einer ersten Kanalmatrix G, die einen Sendekanal zwischen den Quellenvorrichtungen und der Zielortvorrichtung darstellt, und einer zweiten Kanalmatrix F, die eine Sendekanal zwischen der Relaisvorrichtung und der Zielortvorrichtung darstellt;

**dadurch gekennzeichnet, dass** sie folgendes aufweist:

- ein Bestimmungsmittel zum Bestimmen (S302) einer Vorcodiermatrix $P\Delta_r$, die anstrebt, durch die Relaisvorrichtung zum Anwenden des Vorcodierens verwendet zu werden, um vorcodierte komplexe Modulationssymbole auf demselben Betriebsmittel wie die durch die Quellenvorrichtungen gesendeten komplexen Modulationssymbole senden zu können, um die Qualität von durch die Zielortvorrichtung empfangenen Signalen zu erhöhen,

wobei das Bestimmungsmittel dazu geeignet ist, dass die Vorcodiermatrix bestimmt wird auf der Basis der erhaltenen Information, die Quellenvorrichtungen identifiziert, der ersten und zweiten Kanalmatrizen und einer Sendeleistungsbeschränkung, die auf die Relaisvorrichtung anwendbar ist, so dass die Zielortvorrichtung Schätzungen $\tilde{X}$ der komplexen Modulationssymbole aus durch die Zielortvorrichtung empfangenen komplexen Modulationssymbolen Y wie folgt bestimmen kann:

$$\tilde{X} = ((G + FP\Delta_r)^{\dagger}(G + FP\Delta_r) + 2N_0 I_N)^{-1}(G + FP\Delta_r)^{\dagger}Y$$

wobei $\Delta_r$ eine Diagonalmatrix mit Einsen an Positionen entsprechend der erhaltenen Information, die Quellenvorrichtungen identifiziert, und sonst mit Nullen ist, $IN$ eine Identitätsmatrix ist und $N_0$ die Varianz eines additiven weißen gaußschen Rauschens ist;
und dass dasselbe Betriebsmittel ein Betriebsmittel derselben Zeit und Frequenz ist und dass die Information, die Quellenvorrichtungen identifiziert, von der Relaisvorrichtung erhalten wird und eine Information ist, die die Quellenvorrichtungen identifiziert, für welche die Relaisvorrichtung die komplexen Modulationssymbole decodieren kann.

11. System zum Erhöhen einer Qualität von durch eine Zielortvorrichtung (110) eines drahtlosen Telekommunikationsnetzwerks (100) empfangenen Signalen, wobei das System anstrebt, Teil des drahtlosen Telekommunikationsnetzwerks zu sein, wobei die Signale aus einer Vielzahl von auf einem selben Betriebsmittel durch jeweilige Quellenvorrichtungen (101, 102, 103, 104) des drahtlosen Telekommunikationsnetzwerks gesendeten komplexen Modulationssymbolen resultieren, wobei das System eine Relaisvorrichtung (120) aufweist und folgendes:

    - ein erstes Erhaltungsmittel zum Erhalten (S301) einer Information über Quellenvorrichtungen, für welche die Relaisvorrichtung des drahtlosen Telekommunikationsnetzwerks ein Vorcodieren auf jeweilige komplexe Modulationssymbole anwenden muss oder für welche die Relaisvorrichtung das Vorcodieren auf jeweilige Schätzungen der komplexen Modulationssymbole anwenden muss;
    - ein zweites Erhaltungsmittel zum Erhalten (S300) einer ersten Kanalmatrix G, die einen Sendekanal zwischen den Quellenvorrichtungen und der Zielortvorrichtung darstellt, und einer zweiten Kanalmatrix F, die eine Sendekanal zwischen der Relaisvorrichtung und der Zielortvorrichtung darstellt;

**dadurch gekennzeichnet, dass** es folgendes aufweist:

    - ein Bestimmungsmittel zum Bestimmen (S302) einer Vorcodiermatrix $P\Delta_r$, die ein Erhöhen der Qualität von durch die Zielortvorrichtung empfangenen Signalen anstrebt, wobei das Bestimmungsmittel dazu geeignet ist, dass eine Vorcodiermatrix bestimmt wird auf der Basis der erhaltenen Information, die Quellenvorrichtungen identifiziert, der ersten und zweiten Kanalmatrizen und einer Sendeleistungsbeschränkung, die auf die Relaisvorrichtung anwendbar ist, so dass die Zielortvorrichtung Schätzungen $\tilde{X}$ der komplexen Modulationssymbole aus durch die Zielortvorrichtung empfangenen komplexen Modulationssymbolen Y wie folgt bestimmen kann:

$$\tilde{X} = ((G + FP\Delta_r)^\dagger(G + FP\Delta_r) + 2N_0 I_N)^{-1}(G + FP\Delta_r)^\dagger Y$$

wobei $\Delta_r$ eine Diagonalmatrix mit Einsen an Positionen entsprechend der erhaltenen Information, die Quellenvorrichtungen identifiziert, und sonst mit Nullen ist, $I_N$ eine Identitätsmatrix ist und $N_0$ die Varianz eines additiven weißen gaußschen Rauschens ist;
und die Relaisvorrichtung folgendes aufweist:
- Vorcodiermittel zum Anwenden (S405; S504) des Vorcodierens auf die komplexen Modulationssignale oder Schätzungen durch Verwenden der bestimmten Vorcodiermatrix, um vorcodierte komplexe Modulationssymbole zu erzeugen;
- Sendemittel zum Senden (S406, S505) der vorcodierten komplexen Modulationssymbole auf demselben Betriebsmittel wie die durch die Quellenvorrichtungen gesendeten komplexen Modulationssymbole;

und dass dasselbe Betriebsmittel ein Betriebsmittel derselben Zeit und Frequenz ist und dass die Information, die Quellenvorrichtungen identifiziert, von der Relaisvorrichtung erhalten wird und eine Information ist, die die Quellenvorrichtungen identifiziert, für welche die Relaisvorrichtung die komplexen Modulationssymbole decodieren kann.

## Revendications

1. Procédé pour déterminer une configuration d'un réseau de télécommunication sans-fil (100), la configuration visant à accroître une qualité de signaux reçus par un dispositif destination (110) du réseau de télécommunication sans- fil, les signaux résultant d'une pluralité de symboles de modulation complexes transmis sur une même ressource par des dispositifs source respectifs (101, 102, 103, 104) du réseau de télécommunication sans-fil, le procédé comprenant les étapes suivantes :

    - une première étape d'obtention (S301) pour obtenir une information identifiant des dispositifs source pour lesquels un dispositif relais (120) du réseau de télécommunication sans-fil doit appliquer un pré-codage à des symboles de modulation complexes respectifs ou pour lesquels le dispositif relais doit appliquer le pré-codage à des estimés respectifs desdits symboles de modulation complexes ;
    - une seconde étape d'obtention (S300) pour obtenir une première matrice canal G représentant un canal de transmission entre les dispositifs sources et le dispositif destination et une seconde matrice canal F représentant un canal de transmission entre le dispositif relais et le dispositif destination ;

**caractérisé en ce qu'**il comprend :

- une étape de détermination (S302) pour déterminer une matrice de pré-codage $P\Delta_r$ destinée à être utilisée par le dispositif relais pour appliquer le pré-codage pour être capable de transmettre des symboles de modulation complexes pré-codés, sur la même ressource que les symboles de modulation complexes transmis par les dispositifs source, de façon à accroître la qualité de signaux reçus par le dispositif destination,

la matrice de pré-codage étant déterminée sur la base de l'information obtenue identifiant les dispositifs source, des première et seconde matrices canal et d'une contrainte de puissance de transmission applicable au dispositif relais, de telle sorte que le dispositif destination est capable de déterminer des estimés $\tilde{X}$ de symboles de modulation complexes à partir de symboles de modulation complexes $Y$ reçus par le dispositif destination de la manière suivante :

$$\tilde{X} = ((G + FP\Delta_r)^{\dagger}(G + FP\Delta_r) + 2N_0 I_N)^{-1}(G + FP\Delta_r)^{\dagger} Y$$

dans lequel $\Delta_r$ est une matrice diagonale avec des uns à des positions correspondant à l'information obtenue identifiant des dispositifs source et avec des zéros ailleurs, $I_N$ est une matrice identité, et $N_0$ est la variance d'un bruit blanc additif Gaussien ;
et **en ce que** ladite même ressource est une même ressource temps et fréquence, et **en ce que** l'information identifiant des dispositifs sources est obtenue du dispositif relais et est une information identifiant les dispositifs sources pour lesquels le dispositif relais est capable de décoder lesdits symboles de modulation complexes.

2. Procédé selon la revendication 1, **caractérisé en ce que** les première et seconde étapes d'obtention et l'étape de détermination sont répétées lorsque survient un changement de l'information identifiant des dispositifs source.

3. Procédé selon l'une quelconque des revendications 1 et 2, **caractérisé en ce que** la contrainte de puissance de transmission est relative à un budget global de puissance de transmission pour un ensemble entier d'antennes de transmission du dispositif relais ou à un budget individuel de puissance de transmission pour chaque antenne de transmission du dispositif relais.

4. Procédé selon l'une quelconque des revendications 1 à 3, **caractérisé en ce que** l'étape de détermination consiste à déterminer la matrice de pré-codage correspondant à un extrême d'une fonction dépendant d'une interférence entre des signaux reçus par le dispositif destination, ladite fonction étant sujette à une contrainte correspondant à la contrainte de puissance.

5. Procédé selon la revendication 4, **caractérisé en ce que** ladite fonction représente une interférence entre des signaux reçus par le dispositif destination, qui subsistent après application, par le dispositif destination, d'un filtrage d'erreur quadratique moyenne et **en ce que** la matrice de pré-codage déterminée correspond à un minima de ladite fonction.

6. Procédé selon la revendication 4, **caractérisé en ce que** ladite fonction représente une capacité du canal de transmission entre les dispositifs source et le dispositif destination et **en ce que** la matrice de pré-codage déterminée correspond à un maxima de ladite fonction.

7. Procédé selon l'une quelconque des revendications 4 à 6, **caractérisé en ce que** l'étape de détermination consiste à :

- déterminer la matrice de pré-codage, correspondant à l'extrême de la fonction, en utilisant une méthode des multiplicateurs de Lagrange ; ou
- utiliser une méthode de descente de gradient pour déterminer itérativement la matrice de pré-codage correspondant à l'extrême de la fonction ; ou
- obtenir une pluralité de matrices de pré-codage et déterminer quelle matrice de pré-codage parmi la pluralité de matrices de pré-codage correspond à l'extrême de la fonction.

8. Procédé pour accroître une qualité de signaux reçus par un dispositif destination (110) d'un réseau de télécommunication sans-fil (100), les signaux résultant d'une pluralité de symboles de modulation complexes transmis sur une même ressource par des dispositifs source respectifs (101, 102, 103, 104) du réseau de télécommunication sans-fil, le procédé comprenant les étapes suivantes :

- une première étape d'obtention (S301) pour obtenir une information à propos de dispositifs source pour lesquels un dispositif relais (120) du réseau de télécommunication sans-fil doit appliquer un pré-codage à des symboles de modulation complexes respectifs ou pour lesquels le dispositif relais doit appliquer le pré-codage à des estimés respectifs desdits symboles de modulation complexes ;
- une seconde étape d'obtention (S300) pour obtenir une première matrice canal G représentant un canal de transmission entre les dispositifs sources et le dispositif destination et une seconde matrice canal F représentant un canal de transmission entre le dispositif relais et le dispositif destination ;

**caractérisé en ce qu'**il comprend :

- une étape de détermination (S302) pour déterminer une matrice de pré-codage $P\Delta_r$ destinée à accroître la qualité de signaux reçus par le dispositif destination, la matrice de pré-codage étant déterminée sur la base de l'information obtenue identifiant les dispositifs source, des première et seconde matrices canal et d'une contrainte de puissance de transmission applicable au dispositif relais, de telle sorte que le dispositif destination est capable de déterminer des estimés $\tilde{X}$ de symboles de modulation complexes à partir de symboles de modulation complexes $Y$ reçus par le dispositif destination de la manière suivante :

$$\tilde{X} = ((G + FP\Delta_r)^{\dagger}(G + FP\Delta_r) + 2N_0 I_N)^{-1}(G + FP\Delta_r)^{\dagger} Y$$

dans lequel $\Delta_r$ est une matrice diagonale avec des uns à des positions correspondant à l'information obtenue identifiant des dispositifs source et avec des zéros ailleurs, $I_N$ est une matrice identité, et $N_0$ est la variance d'un bruit blanc additif Gaussien ;
et le dispositif relais effectuant :

- une étape de pré-codage (S405 ; S504) pour appliquer le pré-codage auxdits symboles de modulation complexes ou auxdits estimés en utilisant la matrice de pré-codage déterminée, de façon à générer des symboles de modulation complexes pré-codés ;
- une étape de transmission (S406 ; S505) pour transmettre les symboles de modulation complexes pré-codés sur la même ressource que les symboles de modulation complexes transmis par les dispositifs source ;

et **en ce que** ladite même ressource est une même ressource temps et fréquence, et **en ce que** l'information identifiant des dispositifs sources est obtenue du dispositif relais et est une information identifiant les dispositifs sources pour lesquels le dispositif relais est capable de décoder lesdits symboles de modulation complexes.

9. Procédé selon la revendication 8, **caractérisé en ce que** les première et seconde étapes d'obtention et l'étape de détermination sont effectuées par le dispositif relais et **en ce que**, dans la seconde étape d'obtention, les première et seconde matrice canal sont obtenues du dispositif destination.

10. Dispositif pour déterminer une configuration d'un réseau de télécommunication sans-fil (100), la configuration visant à accroître une qualité de signaux reçus par un dispositif destination (110) du réseau de télécommunication sans-fil, les signaux résultant d'une pluralité de symboles de modulation complexes transmis sur une même ressource par des dispositifs source respectifs (101, 102, 103, 104) du réseau de télécommunication sans-fil, le procédé comprenant les étapes suivantes :

- des premiers moyens d'obtention pour obtenir (S301) une information à propos de dispositifs source pour lesquels un dispositif relais (120) du réseau de télécommunication sans-fil doit appliquer un pré-codage à des symboles de modulation complexes respectifs ou pour lesquels le dispositif relais doit appliquer le pré-codage à des estimés respectifs desdits symboles de modulation complexes ;
- des seconds moyens d'obtention pour obtenir (S300) une première matrice canal G représentant un canal de transmission entre les dispositifs sources et le dispositif destination et une seconde matrice canal F représentant un canal de transmission entre le dispositif relais et le dispositif destination ;

**caractérisé en ce qu'**il comprend :

- des moyens de détermination pour déterminer (S302) une matrice de pré-codage $\Delta_r$ destinée à être utilisée par le dispositif relais pour appliquer le pré-codage pour être capable de transmettre des symboles de modulation complexes pré-codés, sur la même ressource que les symboles de modulation complexes transmis par les dispositifs source, de façon à accroître la qualité de signaux reçus par le dispositif destination,

les moyens de détermination étant adaptés de sorte que la matrice de pré-codage est déterminée sur la base de l'information obtenue identifiant les dispositifs source, des première et seconde matrices canal et d'une contrainte de puissance de transmission applicable au dispositif relais, de telle sorte que le dispositif destination est capable de déterminer des estimés $\tilde{X}$ de symboles de modulation complexes à partir de symboles de modulation complexes $Y$ reçus par le dispositif destination de la manière suivante :

$$\tilde{X} = ((G + FP\Delta_r)^\dagger (G + FP\Delta_r) + 2N_0 I_N)^{-1} (G + FP\Delta_r)^\dagger Y$$

dans lequel $\Delta_r$ est une matrice diagonale avec des uns à des positions correspondant à l'information obtenue identifiant des dispositifs source et avec des zéros ailleurs, $I_N$ est une matrice identité, et $N_0$ est la variance d'un bruit blanc additif Gaussien ;
et **en ce que** ladite même ressource est une même ressource temps et fréquence, et **en ce que** l'information identifiant des dispositifs sources est obtenue du dispositif relais et est une information identifiant les dispositifs sources pour lesquels le dispositif relais est capable de décoder lesdits symboles de modulation complexes.

**11.** Système pour accroître une qualité de signaux reçus par un dispositif destination (110) d'un réseau de télécommunication sans-fil (100), le système étant destiné à faire partie du réseau de télécommunication sans-fil (100), les signaux résultant d'une pluralité de symboles de modulation complexes transmis sur une même ressource par des dispositifs source respectifs (101, 102, 103, 104) du réseau de télécommunication sans-fil, le système comprenant un dispositif relais (120) et :

- des premiers moyens d'obtention pour obtenir (S301) une information à propos de dispositifs source pour lesquels le dispositif relais du réseau de télécommunication sans-fil doit appliquer un pré-codage à des symboles de modulation complexes respectifs ou pour lesquels le dispositif relais doit appliquer le pré-codage à des estimés respectifs desdits symboles de modulation complexes ;
- des seconds moyens d'obtention pour obtenir (S300) une première matrice canal G représentant un canal de transmission entre les dispositifs sources et le dispositif destination et une seconde matrice canal F représentant un canal de transmission entre le dispositif relais et le dispositif destination ;

**caractérisé en ce qu'**il comprend :

- des moyens de détermination pour déterminer (S302) une matrice de pré-codage $P\Delta_r$ destinée à accroître la qualité de signaux reçus par le dispositif destination, les moyens de détermination étant adaptés de sorte que la matrice de pré-codage est déterminée sur la base de l'information obtenue identifiant les dispositifs source, des première et seconde matrices canal et d'une contrainte de puissance de transmission applicable au dispositif relais, de telle sorte que le dispositif destination est capable de déterminer des estimés $\tilde{X}$ de symboles de modulation complexes à partir de symboles de modulation complexes $Y$ reçus par le dispositif destination de la manière suivante :

$$\tilde{X} = ((G + FP\Delta_r)^\dagger (G + FP\Delta_r) + 2N_0 I_N)^{-1} (G + FP\Delta_r)^\dagger Y$$

dans lequel $\Delta_r$ est une matrice diagonale avec des uns à des positions correspondant à l'information obtenue identifiant des dispositifs source et avec des zéros ailleurs, $I_N$ est une matrice identité, et $N_0$ est la variance d'un bruit blanc additif Gaussien ;
et le dispositif relais comprenant :

- des moyens de pré-codage pour appliquer (S405 ; S504) le pré-codage auxdits symboles de modulation complexes ou auxdits estimés en utilisant la matrice de pré-codage déterminée, de façon à générer des symboles de modulation complexes pré-codés ;
- des moyens de transmission pour transmettre (S406 ; S505) les symboles de modulation complexes pré-codés sur la même ressource que les symboles de modulation complexes transmis par les dispositifs source ;

et **en ce que** ladite même ressource est une même ressource temps et fréquence, et **en ce que** l'information identifiant des dispositifs sources est obtenue du dispositif relais et est une information identifiant les dispositifs sources pour lesquels le dispositif relais est capable de décoder lesdits symboles de modulation complexes.

Fig. 1

Fig. 2

Obtaining channel matrices corresponding
to channels observed between devices $\quad$ S300

↓

Obtaining an information identifying the
source devices for which the relay device
has to apply a pre-coding $\quad$ S301

↓

Determining a pre-coding matrix on the basis
of the identified sources, of the channel
matrices and of transmission power constraints $\quad$ S302

↓

Providing the determined pre-coding matrix $\quad$ S303

**Fig. 3**

Determining information words to be
transmitted by source devices $\quad$ S401

↓

Determining complex modulation symbols
corresponding to the determined information words $\quad$ S402

↓

Obtaining an information identifying source
devices for which a pre-coding has to be applied $\quad$ S403

↓

Obtaining the pre-coding matrix $\quad$ S404

↓

Applying the pre-coding to determined complex
modulation symbols $\quad$ S405

↓

Transmitting the pre-coded symbols on the same
resource as the source devices $\quad$ S406

**Fig. 4**

Obtaining information identifying source devices
for which a pre-coding has to be applied $\quad$ S501

Obtaining estimates of complex modulation
symbols for the identified source devices $\quad$ S502

Obtaining the pre-coding matrix $\quad$ S503

Applying a pre-coding to the estimates of
complex modulation symbols $\quad$ S504

Transmitting the pre-coded symbols on the same
resource as the source devices $\quad$ S505

Fig. 5

**EP 2 487 807 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Distributed Gain Matrix Optimization in Non-Regenerative MIMO Relay Networks. **ROLNY et al.** Conference record of the forty-third Asilomar Conference on Signals, Systems and Computers. IEEE, 2009
- Performance Evaluation of Virtual MIMO Schemes for the UL OFDMA Based Systems. **MOCO et al.** Conference record of the fourth international conference on wireless and mobile communications. IEEE, 2008
- Spatial Multiplexing of Type-2 L1 and L2 Relays. *3rd Generation Partnership Project, 3GPP Draft R1-091802,* 2009
- Design of half and full-duplex relay systems, based on the MMSE formulation. **JOUNG et al.** fifteenth workshop on statistical signal processing. IEEE, 2009